# EUROPEAN PATENT APPLICATION

(11) **EP 4 821 671 A1**
(43) Date of publication of application: **14.10.2026**
(21) Application number: 25170121.5
(22) Date of filing: 11.04.2025
(51) Int. Cl.: B32B 3/12, B32B 3/28, B32B 5/18, B32B 29/00

(54) **PROTECTIVE PACKAGING PRODUCT AND METHOD FOR ITS MANUFACTURE**

(71) Applicant: Storopack Hans Reichenecker GmbH, 72555 Metzingen (DE)
(72) Inventor:
(74) Representative: DREISS Patentanwälte PartG mbB

(57) **Abstract**

A protective packaging product (10) has a middle layer (14) and a first outer layer (12) and a second outer layer (16), the middle layer (14) comprising a honeycomb material made of a paper material, the first outer layer (12) and the second outer layer (16) each being immediately adjacent and connected to the middle layer (14) on opposite sides of the middle layer (14), wherein a longitudinal axis (24) of the honeycombs (18) of the middle layer (14) is essentially orthogonal to a plane of the first outer layer (12) and the second outer layer (16). At least the first outer layer is a corrugated layer (12) comprising a corrugated foamed Polysaccharide material having a multitude of parallel corrugations (26).

## Description

The present invention relates to a protective packaging product and a method for its manufacture according to the preambles of independent claims.

It is known from the market to manufacture specifically shaped protective packaging products by stacking polyethylene layers one above the other, and by fixing the polyethylene layers to each other by heat welding. Such protective packaging products are used to receive an object in order to protect this object for example against shock loads during transport. Such objects may be TV screens and other fragile objects. WO 2022/171715 A1 discloses a protective packaging product comprising a plurality of corrugated and stacked layers, at least some layers comprising a foamed polysaccharide material, and at least some layers being adhered to an adjacent layer. CN 107825800 A discloses a protective packaging product made of a paper honeycomb and having on one side an outer starch foam layer which is encapsulated between to film layers.

It is an object of the present invention to provide a protective packaging product having good protection and environmental characteristics.

This object is achieved by means of a protective packaging products having the features of claims 1 or 9 and a method for its manufacture according to claim 10. Further embodiments are given in the dependent claims.

The invention has the advantage that it provides a very good shock absorption. The inventive protective packaging product absorbs a shock even several times compared to classic honeycomb cardboard pads. Furthermore, only a comparatively small amount of material is required to protect a product from shocks. The packaging product can be relatively small and only placed where protection is actually necessary. And, last but not least: The entire packaging product is biodegradable.

This is achieved by a sandwich type protective packaging product having a middle layer and a first outer layer and a second outer layer. Typically, the middle layer is significantly thicker than the first and the second outer layers, for example at least about 10 times as thick. A typical value for the thickness of the middle layer is in the region of 20-40 mm, but can be even greater. A typical value for the thickness of the outer layers is in the range of 2-5 mm, but the thickness can also be smaller or greater.

The middle layer comprises a honeycomb layer made of a paper material. The individual honeycombs of the middle layer are typically generally approximately hexagonal. In principle, however, other suitable cross-sections or shapes are also possible. The individual honeycombs of the middle layer can, for example, be bonded together by a polyvinyl alcohol (PVA) adhesive. It is understood that the term "paper material" is to be understood relatively broadly. It includes, for example and particularly preferably, kraft paper, but can also include, for example, cardboard, high-yield paper, recycled paper and combination of such papers.

The first outer layer and the second outer layer each are immediately adjacent and firmly connected to the middle layer on opposite sides of the middle layer, all layers being essentially parallel to each other. A longitudinal axis of the honeycombs of the middle layer is substantially orthogonal to a plane of the first outer layer and the second outer layer. Thus, a layered sandwich type protective packaging product is created with a honeycomb middle layer of paper covered by the first outer layer and the second outer layer.

At least the first outer layer is a corrugated layer comprising a corrugated foamed polysaccharide material. For example, the first outer corrugated layer can consist exclusively of a foamed polysaccharide material. However, it is also possible that the main component of the first outer corrugated layer is a foamed polysaccharide material, but that the first outer corrugated layer also comprises a polyvinyl alcohol (PVA) additive and/or other additives. As a result of the foaming, the polysaccharide material comprises a large quantity of evenly distributed bubble-like small voids, as is usual in a foamed material, whereby the first outer corrugated layer comprises a comparatively low density. It is understood that the material of the first outer corrugated layer is in a cured or dry state.

The corrugations or waves of the corrugated outer layer(s) and the corrugated foamed Polysaccharide material, respectively, are essentially parallel to each other and also typically essentially parallel to one of the two symmetry axis of the honeycomb middle layer. By consequence, a certain degree of flexibility of the protective packaging product is achieved about a first axis parallel to the corrugations, whereas the protective packaging product is relatively stiff about a second axis which is orthogonal to the first axis and thus orthogonal to the corrugations. Typically, the corrugations at least initially may have a height which is greater than the thickness of the non-corrugated layer. More specifically, the height of the corrugations is at least approx. twice the thickness of the non-corrugated layer.

The corrugated outer layer(s) may be manufactured using an extruder. The extruder may be fed with thermoplastic polysaccharide pellets and may be configured to extrude generally flat polysaccharide foam sheets usable to create the polysaccharide layers in the protective packaging product. When such a polysaccharide foam sheet is extruded, the material expands when it leaves the die of the extruder, which may create a corrugating effect on the extruded foam sheet. This effect may be enhanced by using a die having a corrugated shape.

In a further embodiment, both the first outer layer and the second outer layer are corrugated layers comprising a corrugated foamed Polysaccharide material. This yields even better material properties.

In a further embodiment, the corrugated foamed polysaccharide material of the first corrugated outer layer and/or the second outer corrugated layer comprises foamed starch or is substantially foamed starch. The first corrugated outer layer and/or the second outer corrugated layer are thus at least substantially created by a foamed material made substantially of or comprising starch, optionally with an additive of PVA and/or other additives. Preferably, the first corrugated outer layer and/or the second outer corrugated layer comprises at least approx. 75 percent by weight starch. Such a material is inexpensive and can be easily produced, and it can be disposed of in an ecologically completely safe manner. However, other polysaccharides are also conceivable, for example chitin, alginates, HPMC, lignine and all components of wood (cellulose, hemicellulose, lignine).

In a further embodiment, the first outer corrugated layer and/or the second outer corrugated layer are each connected to the middle layer by a bonding means, which preferably comprises at least one of following materials: dispersion and/or emulsion of synthetic or natural polymers; synthetic or natural polymers applied in hot melt; natural polymers, such as starch, dextrin, casein, Arabic gum; synthetic polymers, such as ethylene-vinylacetat-copolymers, polyurethane, polyethylene, styrenic basis, epoxy, latex, polyvinyl alcohol; the foregoing materials, at least one of which being biobased. Particularly preferred are starch and polyvinyl alcohol. Such a bonding means can be produced very simply, for example, by spraying the surface of the first outer corrugated layer and/or the second outer corrugated layer facing the middle layer with a liquid, preferable a water based liquid or and still more preferred water, before the layers are joined together. The advantage of this further embodiment is therefore that it is technically simple, inexpensive and ecologically neutral.

In a further embodiment, at least some of the walls of the honeycombs of the middle layer penetrate a distance into the first outer corrugated layer and/or the second outer corrugated layer. This increases the surface area via which the first outer corrugated layer and/or the second outer corrugated layer is respectively connected to the middle layer and ultimately increases the stability of the protective packaging product.

In a further embodiment, an outside and/or an inside surface of the first outer corrugated layer and/or the second outer corrugated layer is covered by a layer, such as a paper layer or an elastic film. The outside surface is the surface facing away from the middle layer. Such a layer may increase the stability of the first outer corrugated layer and/or the second outer corrugated layer against external influences, both mechanical and chemical.

In a further embodiment, an edge of a wall of a honeycomb of the middle layer, which faces the first outer corrugated layer and/or the second outer corrugated layer, comprises at least one recess. As a result, the wall of the honeycomb is additionally hooked into the respective first outer corrugated layer and/or second outer corrugated layer, whereby the connection between the layers is further improved.

In a further embodiment, the corrugated foamed Polysaccharide material of at least one of the first and second outer corrugated layers is pressed into a flattened condition prior to or after being connected to the middle layer. Or, in other words: The wave-like corrugations are crushed in a direction perpendicular to the plane of the first and second outer corrugated layer, respectively, such that the layer thickness is reduced compared to a non-flattened state. Typically, the wave-like appearance of the corrugations with free spaces between adjacent corrugations is transformed into a more meander-like appearance with a higher corrugation density and less free space between adjacent corrugations, and typically a width of a corrugation becomes greater than the thickness of each of the outer corrugated layers after flattening. This results in a smoother and more even outer surface of a layer, compared to a non-flattened condition, which improves the haptic feel when handled by a user.

In a further embodiment, both the first and the second outer layers are corrugated layers, and a ratio of the thicknesses of the first and second outer layers to a thickness of the middle layer is in the range of approx. 1 : 8 to 1:12, preferably approx.. 1 : 10. This has shown to provide very good protection.

The invention also relates to a method for producing a protective packaging product of the type described above. The method comprises the following steps: a) providing a first outer corrugated layer of a corrugated foamed polysaccharide material; b) providing a middle layer of a paper honeycomb material; c) spraying a liquid (preferably a water based liquid or still more preferred water) onto a surface of the first outer corrugated layer facing the middle layer; d) pressing the first outer corrugated layer with its water-sprayed surface in direct contact against the middle layer. This method can be realized automatically as a continuous process, which enables a very inexpensive production of the protective packaging product according to the invention. The liquid may "activate" or "create" the bonding means by reacting with material or dissolving material of the first outer corrugated layer, or may comprise the bonding means.

In a further development thereof, the method also comprises the following steps: e) providing a second corrugated outer layer of a foamed corrugated polysaccharide material relative to the first outer corrugated layer on an opposite side of the middle layer; f) spraying a liquid (preferably a water based liquid or still more preferred water) onto a surface of the second outer corrugated layer facing the middle layer; g) pressing the second outer corrugated layer with its water-sprayed surface in direct contact against the middle layer. In this way, a classic sandwich material with a core (middle layer) and two cover layers (first outer corrugated layer and second outer corrugated layer) is produced simply and in a possible continuous process, which is very stable. Again, the liquid may "activate" or "create" the bonding means by reacting with material or dissolving material of the second outer corrugated layer, or may comprise the bonding means.

In a further embodiment, steps a and e are carried out simultaneously, steps c and f are carried out simultaneously, and steps d and g are carried out simultaneously. In this way, the first outer corrugated layer and the second outer corrugated layer are bonded to the middle layer at the same time, which speeds up and simplifies manufacture.

In the following, embodiments of the invention are explained with reference to the accompanying drawing. The drawing shows:

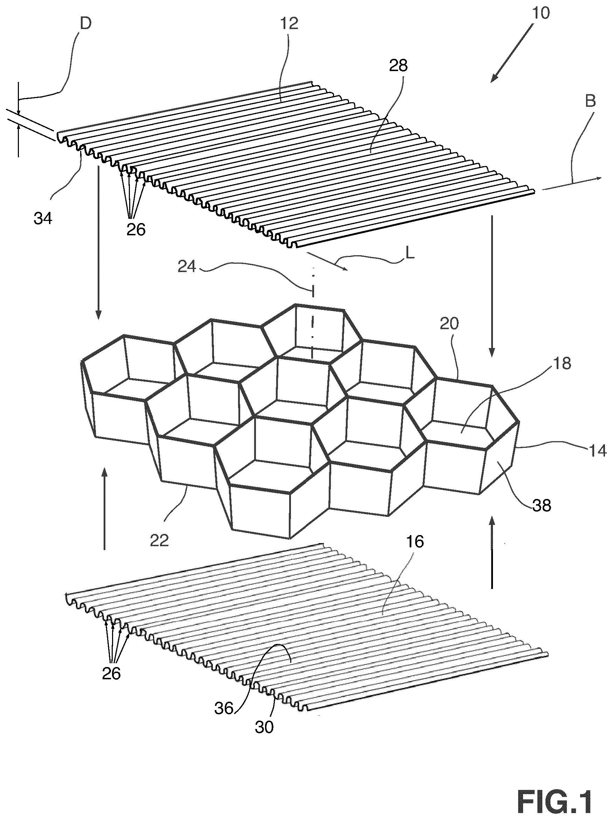

- Figure 1: an exploded perspective view of a region of a protective packaging product comprising a first outer corrugated layer, a middle layer and a second outer corrugated layer;
- Figure 2: an enlarged sectional view of the protective packaging product of Figure 1;
- Figure 3: a representation similar to Figure 2 of a slightly modified protective packaging product;
- Figure 4: a further schematic sectional representation of the protective packaging product of Figures 1 and 2, respectively;
- Figure 5: an enlarged sectional view of a modified detail of the protective packaging product of Figures 1 and 2, respectively;
- Figure 6: a perspective view of an alternative embodiment of a honeycomb of the middle layer of the protective packaging product of Figures 1 and 2, respectively; and
- Figure 7: a schematic representation of a device for carrying out a method for producing the protective packaging product of Figure 1.

In the following, functionally equivalent elements and areas in different Figures and in different embodiments have the same reference signs. They are normally only described in detail when first mentioned. Furthermore, for reasons of simplification, not all reference signs are shown in all Figures.

A protective packaging product bears the reference sign 10 in the Figures generally. It comprises a first outer corrugated layer 12, a middle layer 14 and a second outer corrugated layer 16, all layers 12-16 being essentially parallel to each other. The first outer corrugated layer 12 and the second outer corrugated layer 16 are identical in the present exemplary embodiment. They comprise a foamed corrugated polysaccharide material, in the present case foamed starch. In the present exemplary embodiment, the two layers 12 and 16 substantially (by at least 75 percent by weight) consist of the foamed starch, optionally with an addition of polyvinyl alcohol. It can be seen that a thickness extension D of the layers 14 and 16, which extends orthogonally to a respective plane of the two layers 12 and 16, is significantly smaller than a length extension L and a width extension B of the layers 14 and 16, which span the said plane.

The middle layer 14 is a honeycomb layer made of a paper material. The preferred paper material is kraft paper, but cardboard, high-yield paper, recycled paper and combinations of such papers or the like is also possible, for example. In the present exemplary case, the middle layer 14 comprises a plurality of essentially hexagonal honeycombs 18 having a first and, in the Figures, upper edge 20 facing the first outer corrugated layer 12 and a second and, in the Figures, lower edge 22 facing the second outer corrugated layer 16. A longitudinal axis 24 of a honeycomb 18 of the middle layer 14 is substantially orthogonal to the planes spanned by the lengthwise extension L and the widthwise extension B of the layers 12 and 16.

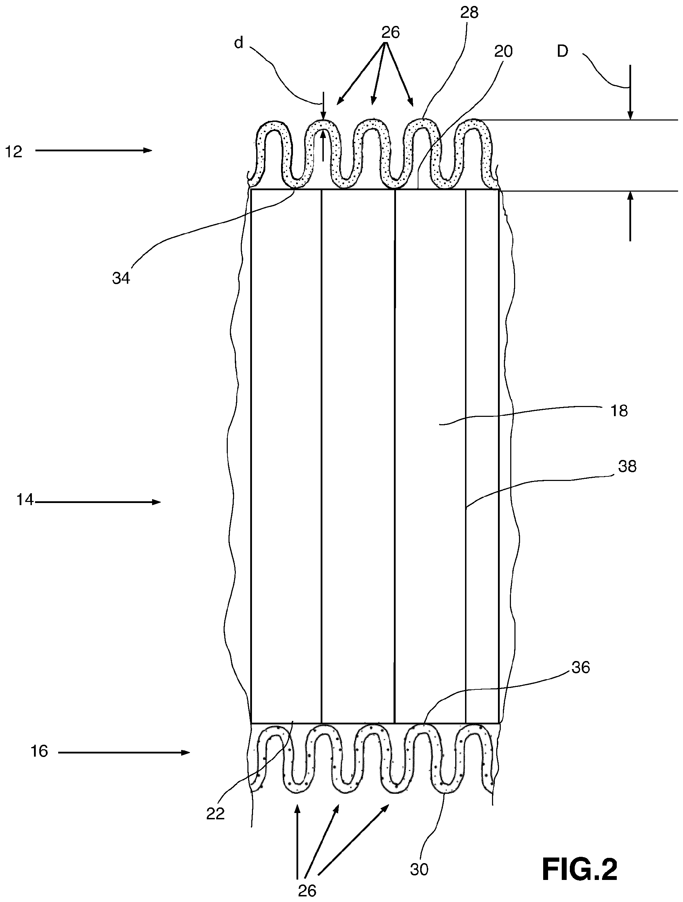

As can be seen from Figure 2 in more detail, the first outer corrugated layer 12 and the second outer corrugated layer 16 comprise a multitude of in the present exemplary embodiment wave-like corrugations 26 making essentially 180° U-turns and having essentially parallel legs. The corrugations 26 of the corrugated outer layers 12 and 16 and the corrugated foamed Polysaccharide material, respectively, are essentially parallel to each other and also typically essentially parallel to one of the two symmetry axis of the honeycomb middle layer 14. By consequence, a certain degree of flexibility of the protective packaging product 10 is achieved about a first axis parallel to the width extension B and to the corrugations 26, whereas the protective packaging product 10 is relatively stiff about a second axis which is parallel to the length extension L and orthogonal to the corrugations 26.

As can be seen, in the embodiment of Figure 2 the corrugations 26 and thus the outer corrugated layers 12 and 16 at least initially have a height D which is considerably greater than a thickness d of the non-corrugated layer. More specifically, a height D of the corrugations 26 is at least approx. twice the thickness d of the non-corrugated layer.

The corrugated outer layers 12 and 16 may be manufactured using an extruder. The extruder may be fed with thermoplastic polysaccharide pellets and may be configured to extrude generally flat polysaccharide foam sheets usable to create the first and second outer layers 12 and 16 in the protective packaging product 10. When such a polysaccharide foam sheet is extruded, the material expands when it leaves the die of the extruder, which may create a corrugating effect on the extruded foam sheet. This effect may be enhanced by using a die having a corrugated shape.

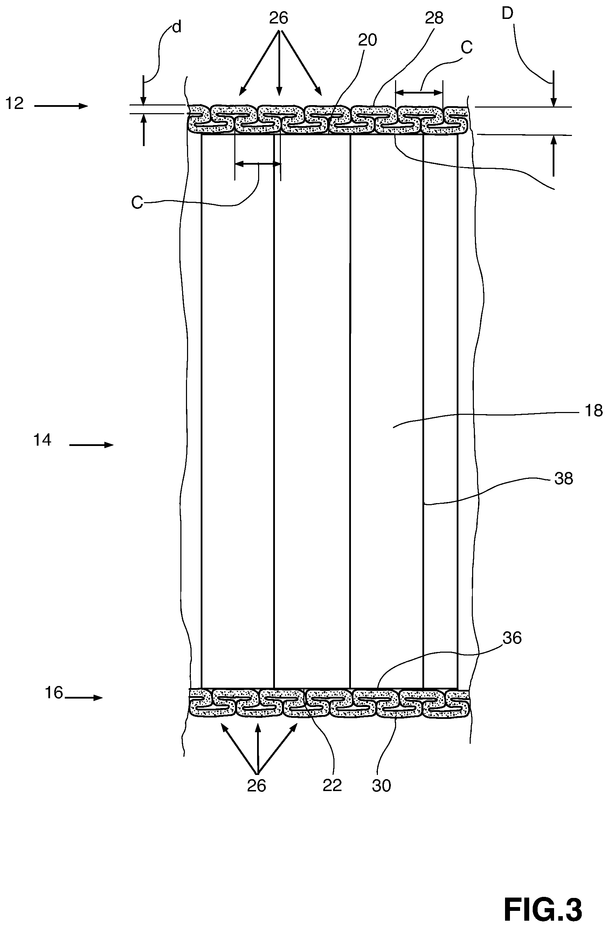

In the exemplary embodiment shown in Figure 3, the corrugated foamed Polysaccharide material of the first and second outer corrugated layers 12 and 16 is pressed into a flattened condition prior or after being connected to the middle layer 14. This results in a meander-like sectional shape of the corrugations 26 and a relatively flat and even outer surface 28, 30 of the first and second outer corrugated layers 12 and 16. Or, in other words: the originally wave-like appearance with parallel U-turns with a large free spaces between neighboring legs of the corrugations 26 is transformed into a more meander-like appearance with a higher corrugation density and less free space between adjacent corrugations. In the present exemplary embodiment a width C of a corrugation 26 thus becomes at least slightly greater than the thickness D of the outer corrugated layers 12, and 16. Again, the corrugations 26 and thus the outer corrugated layers 12 and 16 have a height D which is greater than the thickness d of the non-corrugated layer. In the present exemplary embodiment D is about 2 x d.

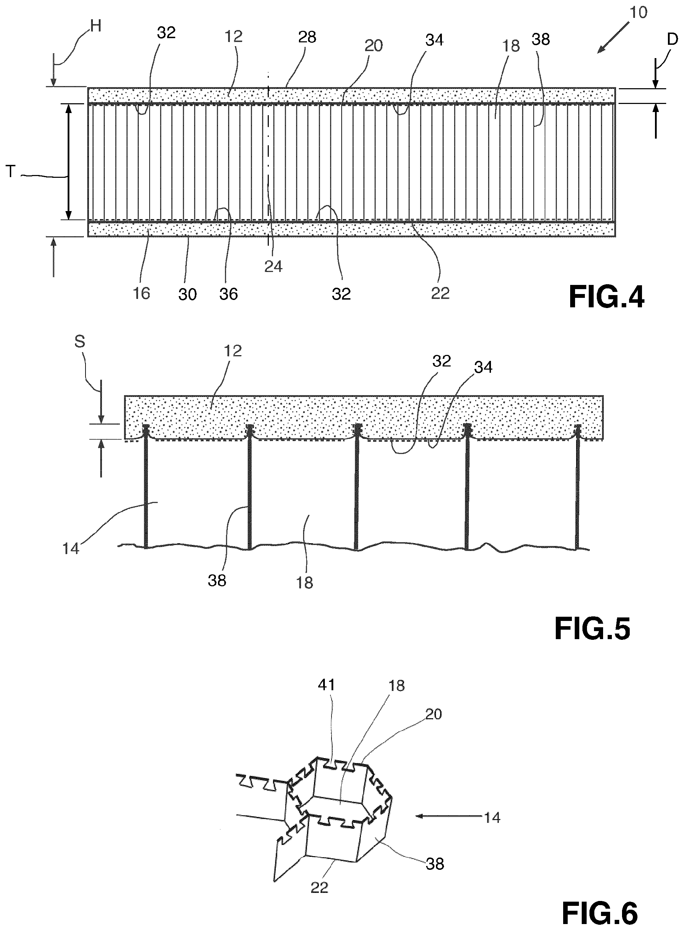

In Figures 4 and 5, for the sake of simplicity the first and second outer corrugated layers 12 and 16 are shown without the corrugations 26, although of course at least one of them has corrugations as shown in one of Figures 2 or 3.

As can be seen from Figures 4 and 5, the first and second outer corrugated layers 12 and 16 are arranged directly adjacent to the middle layer 14 and are connected thereto by an adhesive bond or adhesive means 32. This is indicated by dashed lines in Figures 4 and 5. The adhesive means 32 is produced, as will be explained below, by spraying surfaces 34 and 36 of first and second outer corrugated layers 12 and 16 facing the middle layer 14 in the present exemplary and preferred embodiment with water or a water based liquid (other liquids also being possible) prior to joining them to the middle layer 14. In this way, the starch (and/or the PVA) from which the first and second outer corrugated layers 12 and 16 are made becomes moist on the surfaces 34 and 36 and thereby sticky, thus forming said starch adhesive 32. After the starch adhesive 32 has dried, the two layers 12 and 14 are firmly bonded to the respective edges 20 and 22 of the honeycombs 18.

Figure 5 also shows that the upper edge 20 of a wall 38 of the honeycomb 18 may penetrate into the first outer corrugated layer 12 by a distance S. Identical to this, the lower edge 22 of the wall 38 of the honeycombs 18 may penetrate into the second outer corrugated layer 16 by such a distance, wherein this is not drawn. This increases the contact area between the first outer corrugated layer 12 and the middle layer 14 or between the second outer corrugated layer 16 and the middle layer 14, which is available for the bonding 32, and this improves the stability of the overall sandwich composite comprising the first outer corrugated layer 12, the middle layer 14 and the second outer corrugated layer 16.

In an alternative and not shown embodiment of a protective packaging product shown, an outer surface of the first outer corrugated layer facing away from the middle layer is covered by a thin layer, such as paper or an elastic film. A bond can also be used for this purpose, which is created by moistening the outer surface. The second outer corrugated layer can also comprise such a layer on its outer surface.

As can be seen from Figure 6, the edge 20 of the walls 38 of the honeycombs 18 facing the first outer corrugated layer 12 can comprise one or more recesses 41, which preferably widen away from the first outer corrugated layer 12 as shown in Figure 6. This further improves the connection between the first outer corrugated layer 12 and the middle layer 14. It will be understood that the lower edge 22 of the walls 38 of the honeycombs 18 shown in Figure 11 can also comprise such recesses 40, although this is not shown in Figure 6 for the sake of simplicity.

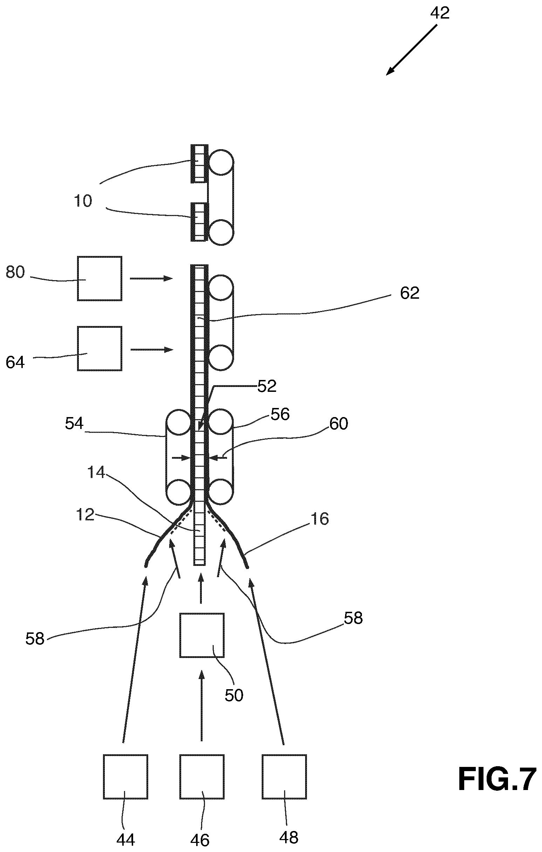

Referring now to Figure 7, a device 42 and a method operating on the device 42 by which a protective packaging product 10 as shown in the previous Figures can be produced will be explained.

A functional block 44 symbolizes the provision of the first outer corrugated layer 12 of foamed corrugated polysaccharide material (starch), and a functional block 48 symbolizes the provision of the second outer corrugated layer 16 also of foamed corrugated polysaccharide material (starch). A function block 46 symbolizes the provision of the middle layer 14 made of a paper honeycomb material, which has not yet been expanded. The expansion takes place in a function block 50. Both first and second outer corrugated layers 12 and 16 are provided in an already flattened condition, as explained above with respect to Figure 3. Moreover, both first and second outer corrugated layers 12 and 16 are provided with the axis of the corrugations 26 perpendicular to the plane of Figure 7.

The three layers 12, 14 and 16 are introduced into an intermediate space or gap 52 between two belt conveyors 54 and 56. Beforehand, the surfaces 34 and 36 of the first and second outer corrugated layers 12 and 14 facing the middle layer 14 are sprayed in the present exemplary and preferred embodiment with water or a water based liquid (other liquids also being possible) and thereby moistened to produce the starch adhesive 32, which is indicated by arrows 58. A width 60 of the gap 52 corresponds to a height H of the protective packaging product 10 of Figure 4.

As the product passes through the two belt conveyors 54 and 56, the two first and second outer corrugated layers 12 and 16 are simultaneously pressed into direct contact with the middle layer 14 and thereby bonded or adhered thereto. Heat can also be applied to accelerate the drying process. The packaging product 10 is thus laminated as it passes through the two belt conveyors 54 and 56.

This produces a laminated continuous product 62, from which individual protective packaging products 10 are punched out by a punching tool 64. A robot 80 may take the punched-out packaging products 10 and place them e.g. in a shipping container (not shown).

## Claims

1. A protective packaging product (10) having a middle layer (14) and a first outer layer (12) and a second outer layer (16), the middle layer (14) comprising a honeycomb material made of a paper material, the first outer layer (12) and the second outer layer (16) each being immediately adjacent and connected to the middle layer (14) on opposite sides of the middle layer (14), wherein a longitudinal axis (24) of the honeycombs (18) of the middle layer (14) is essentially orthogonal to a plane of the first outer layer (12) and the second outer layer (16), **characterized in that** at least the first outer layer is a corrugated layer (12) comprising a corrugated foamed Polysaccharide material.

2. The protective packaging product (10) of claim 1, **characterized in that** both the first outer layer (12) and the second outer (16) layer are corrugated layers comprising a corrugated foamed Polysaccharide material.

3. The protective packaging product (10) of ate least one of the preceding claims, wherein the corrugated foamed Polysaccharide material of the first outer corrugated layer (12) and/or the second outer corrugated layer (16) comprises foamed starch or is substantially foamed starch.

4. The protective packaging product (10) of at least one of the preceding claims, wherein the first outer corrugated layer (12) and/or the second outer corrugated layer (16) are connected to the middle layer (14) by a bonding means (32) , which preferably comprises at least one of following materials: dispersion and/or emulsion of synthetic or natural polymers; synthetic or natural polymers applied in hot melt; natural polymers, such as starch, dextrin, casein, Arabic gum; synthetic polymers, such as ethylene-vinylacetat-copolymers, polyurethane, polyethylene, styrenic basis, epoxy, latex, polyvinyl alcohol; the foregoing materials, at least one of which being biobased.

5. The protective packaging product (10) of at least one of the preceding claims, wherein at least some of the walls (38) of the honeycombs (18) of the middle layer (14) penetrate a distance (S) into the first outer corrugated layer (12) and/or the second outer corrugated layer (16).

6. The protective packaging product of at least one of the preceding claims, wherein an outside surface and/or an inside surface of the first outer corrugated layer and/or the second outer corrugated layer is covered by a layer.

7. The protective packaging product (10) of at least one of the preceding claims, wherein an edge (20, 22) of a honeycomb wall (38) of the middle layer (14) facing the first outer corrugated layer (12) or the second outer corrugated layer (16) comprises at least one recess (41).

8. The protective packaging product (10) of at least one of the preceding claims, wherein the corrugated foamed Polysaccharide material of at least one of the first outer corrugated layer (12) and second outer corrugated layer (16) is pressed into a flattened condition prior or after being connected to the middle layer (14).

9. The protective packaging product (10) of at least one of the preceding claims, wherein both the first and the second outer layers are corrugated layers (12, 16), and wherein a ratio of the thicknesses (D) of the first and second outer layers to a thickness (T) of the middle layer (14) is in the range of approx. 1 : 8 to 1:12, preferably approx.. 1 : 10.

10. A method for manufacturing the protective packaging product (10) of at least one of the preceding claims 1-9, **characterized in that** it comprises the following steps:
a) providing a first outer corrugated layer (12) comprising a corrugated foamed Polysaccharide material;
b) providing a middle layer (14) of a paper honeycomb material;
c) spraying a liquid onto a surface (34) of the first outer corrugated layer (12) facing to the middle layer (14);
d) pressing the first outer corrugated layer (12) with its liquid sprayed surface (34) in direct contact against the middle layer (14).

11. The method of claim 10, wherein it comprises the following steps:
e) providing a second outer corrugated layer (16) comprising a corrugated foamed Polysaccharide material on an opposite side of the middle layer (14) relative to the first outer corrugated layer (12),
f) spraying a liquid onto a surface (36) of the second outer corrugated layer (16) facing to the middle layer (14), and
g) pressing the second outer corrugated layer (16) with its liquid sprayed surface (36) in direct contact against the middle layer (14).

12. The method of claim 9, wherein steps a and e are executed simultaneously, steps c and f are executed simultaneously, and steps d and g are executed simultaneously.
